# EUROPEAN PATENT APPLICATION

(11) **EP 4 797 241 A1**
(43) Date of publication of application: **26.08.2026**
(21) Application number: 26155654.2
(22) Date of filing: 02.02.2026
(51) Int. Cl.: G08G 5/21, G08G 5/55

(54) **FEEDBACK TO PILOT INPUT - VIRTUAL CO-PILOT**

(30) Priority: 25.02.2025 US 202519062899
(71) Applicant: Honeywell International Inc., Charlotte, NC 28202 (US)
(72) Inventor: COUFAL, Zdenek, Charlotte, 28202 (US)
(74) Representative: Haseltine Lake Kempner LLP

(57) **Abstract**

A computer-implemented method for providing feedback notifications to a pilot in an aircraft includes: receiving an input command from a pilot of an aircraft; generating a feedback notification comprising the input command; and rendering the feedback notification in the aircraft.

## Description

### CROSS REFERENCE TO RELATED APPLICATIONS

The present application claims the benefit of U.S. Non-Provisional Application Serial No. 19/062,899, filed February 25, 2025, which is incorporated herein by reference in entirety.

### TECHNICAL FIELD

The techniques of this disclosure relate to aviation safety.

### BACKGROUND

Pilot situational awareness is an important aspect of aviation safety. Pilot situational awareness includes a pilot's accurate perception of the position of the aircraft, relationship of the aircraft to the surrounding environment (other aircraft, terrain, weather), and the ability to predict future events. For example, situational awareness may include gathering information through senses (sight, sound, touch).

### SUMMARY

One of the components of pilot situational awareness is understanding the meaning of perceived information. Another component of situational awareness may involve predicting future events based on current trends. Yet another component of situational awareness of a pilot may involve acting appropriately based on the current situation and predictions. Pilots typically monitor critical parameters such as, but not limited to, Air Traffic Controller (ATC) instructions, Enhanced Ground Proximity Warning System (EGPWS) alerts, aircraft systems parameters, traffic parameters, and weather parameters. The ATC instructions may provide information about altitude restrictions, clearances, and the like. The EGPWS alerts may provide warnings of potential ground collisions. Aircraft systems may provide information about angle of attack, airspeed, altitude, vertical speed, fuel levels, and so on. The traffic parameters may provide information about other aircrafts in the vicinity. The weather parameters may provide information about weather conditions, forecasts, and the like.

Flight management systems (FMS) are essential tools for pilots, providing important information for flight planning and execution. The FMS may automate flight planning, navigation, and some aircraft systems. Autopilot may control aircraft flight path, reducing pilot workload. Traffic Collision Avoidance System (TCAS) may alert pilots of potential midair collisions. Maintaining situational awareness is important for preventing accidents. Maintaining situational awareness may allow for smooth and efficient flight operations. Even with advanced technology, human error can still occur. Pilots may input incorrect data or make incorrect assumptions, leading to discrepancies between predicted and actual flight parameters.

The disclosure describes techniques that implement feedback and input repetition across all critical aircraft systems. For example, the disclosed system may verbally confirm substantially all pilot inputs. For example, if a pilot inputs an altitude of 10,000 feet into an FMS, then the avionics of the aircraft may confirm the input by an audible announcement, such as "Altitude set to 10,000 feet." As another example, if a pilot inputs a heading of 360 degrees into the FMS, then the avionics may confirm the input by an audible announcement, such as "Heading select 360 degrees"). The disclosed techniques may also display the input on the primary flight display (PFD) or a dedicated input confirmation screen. These techniques may reduce the likelihood of setting an incorrect parameter that could lead to an unintended flight path or conflict with air traffic control instructions.

In one non-limiting example, the disclosed feedback and repetition system may announce engine thrust changes inputted by a pilot (e.g., "Increasing thrust to 80%"). The disclosed system may also display engine parameters (thrust, RPM, fuel flow) on engine instruments and the PFD. In the absence of a second pilot to verify actions, feedback from the disclosed system may act as a secondary check, catching potential errors before these errors may impact flight safety. In some examples, the disclosed system may allow pilots to customize the level of feedback and repetition based on their individual preferences and experience.

According to an example of the present disclosure, a computer-implemented method for providing feedback notifications to a pilot in an aircraft includes: receiving an input command from a pilot of an aircraft; generating a feedback notification comprising the input command; and rendering the feedback notification in the aircraft.

According to another example of the present disclosure, a system for providing feedback notifications to a pilot in an aircraft, the system includes: a memory; and processing circuitry coupled to the memory and configured to: receive, by avionics of the aircraft, an input command from a pilot of the aircraft; generate, by the avionics, a feedback notification comprising an indication of the input command; and render, by the avionics, the feedback notification in the aircraft.

According to yet another example of the present disclosure, non-transitory computer-readable storage media having instructions encoded thereon, the instructions configured to cause processing circuitry to: receive, by avionics of an aircraft, an input command from a pilot of the aircraft; generate, by the avionics, a feedback notification comprising an indication of the input command; and render, by the avionics, the feedback notification in the aircraft.

The details of one or more examples of the disclosure are set forth in the accompanying drawings and the description below. Other features, objects, and advantages will be apparent from the description, drawings, and claims.

### BRIEF DESCRIPTION OF DRAWINGS

FIG. 1 is a simplified illustration of an aircraft having a feedback and repetition module in accordance with the techniques of this disclosure.
FIG. 2 illustrates an example of an avionics system in accordance with the techniques of this disclosure.
FIG. 3 depicts a flowchart illustrating a method for providing feedback notifications to a pilot in an aircraft in accordance with the techniques of the present disclosure.

### DETAILED DESCRIPTION

Typically, non-normal flight situations may significantly increase the workload of a pilot and may increase the risk of errors. When systems like the FMS and AutoPilot (AP) are unavailable, pilots may need to manually control the aircraft, constantly adjusting flight path, altitude, and speed. This may significantly increase workload and mental demand. Severe weather, such as, but not limited to, turbulence, wind shear, and icing may require constant manual adjustments to maintain control and avoid hazards. Engine failures, fires, and other emergencies may demand immediate and decisive actions, diverting attention from routine monitoring tasks. Dealing with non-normal situations may easily distract pilots from monitoring critical parameters like traffic, terrain, and weather. In emergencies, pilots may be bombarded with information from various sources (warnings, checklists, ATC communications), making processing and integration of all the data difficult. Even with advanced technology, human error can still occur. Pilots may input incorrect data or make incorrect assumptions, leading to discrepancies between predicted and actual flight parameters.

In other words, many emergency situations may increase stress and fatigue of a pilot, further impairing cognitive function and decision-making. The increased workload and stress may lead to mistakes in data entry, such as incorrect altitude selections, heading changes, or communication with ATC. Distractions and information overload may lead to misjudgments regarding aircraft position, speed, and altitude, increasing the risk of collisions or other incidents. In critical situations, delayed responses due to increased workload or confusion may have serious consequences.

Modern aircrafts may be equipped with sophisticated autopilots, advanced flight management systems, and self-diagnostic capabilities. These advancements may significantly reduce pilot workload and automate routine tasks. The aviation industry is facing a growing pilot shortage. Single Pilot Operations (SPOs) could help alleviate this pressure by allowing airlines to operate flights with a single highly trained pilot. Airlines could potentially reduce operational costs by eliminating the need for a second pilot. A major concern is the potential loss of redundancy and crew coordination in case of emergencies, system malfunctions, or pilot incapacitation.

Regulatory bodies may need to be convinced that SPO may maintain an equivalent or even higher level of safety compared to traditional two-pilot operations. Public acceptance of SPO is likely to be a significant hurdle. Building trust and confidence in single-pilot operations may be important. Single pilots may require extensive training to handle the additional workload and potential emergencies effectively. Managing fatigue and maintaining situational awareness during long flights may be important as well. If SPO is eventually approved, such operations are likely to be introduced gradually, perhaps starting with smaller aircraft on shorter routes. Extensive testing, data collection, and pilot training may be essential before widespread adoption.

In a two-pilot cockpit, the presence of a second pilot provides an important layer of safety through cross-checking and redundancy. In an aircraft cockpit, the FMS is a complex computer system that helps pilots navigate and manage the flight. Both pilots may input data into the FMS. This input data may include, but is not limited to: flight, plan, performance data and weather information. Flight plan may include, but is not limited to, routing, waypoints, altitudes, and speeds. Performance data may include, but is not limited to, takeoff and landing data, fuel loads, weight and balance. Weather information may include, but is not limited to, winds, temperatures, and other weather conditions.

Pilots may constantly cross-check each other's inputs. This confirmation may ensure accuracy and may prevent errors. The FMS itself may perform calculations and checks for inconsistencies. The FMS may alert the pilots to any potential issues. FMS functions may include, but are not limited to: navigation, performance calculations and automation. The navigation function of the FMS may calculate the most efficient flight path. The navigation function of the FMS may also guide the aircraft along the planned route. In addition, the navigation function of the FMS may provide real-time position information. The performance calculations function of the FMS may determine optimal speeds and altitudes for fuel efficiency.

In single-pilot operations, the absence of a second pilot may significantly increase the workload and the risk of errors. Advantageously, feedback and repetition may act as a form of automated cross-checking, similar to how two pilots would verify each other's actions. By confirming inputs, the disclosed techniques may free up the cognitive resources of the pilot to focus on other critical tasks like situational awareness and traffic monitoring. Consistent feedback may reinforce the understanding of the pilot of the current state of the aircraft and the effects of their inputs. As yet another advantage, discrepancies between intended actions and actual system responses may be quickly identified, allowing for immediate corrective action. By minimizing the risk of unintended actions or incorrect system responses, the disclosed techniques may contribute to a significant increase in flight safety. The reassurance provided by audio feedback may help reduce pilot stress and improve overall confidence. In one non-limiting example, verbal confirmation ("Autopilot engaged") and visual cues (e.g., a dedicated autopilot engagement indicator) may provide clear confirmation of the command of the pilot. When the pilot sets a new altitude, the disclosed system may announce the new target altitude (e.g., "Descending to 10,000 feet") and may display the new target altitude prominently on the flight instruments. Furthermore, automatic readback of ATC clearances may ensure accurate understanding and may reduce the risk of miscommunications.

In single-pilot operations, the disclosed feedback and repetition module may play an important role in enhancing safety and reducing the risk of errors. Pilots are human, and occasional inadvertent inputs may happen. For example, pilots may accidentally hit the wrong button on the autopilot or may mis-key an altitude setting. The disclosed feedback and repetition module may immediately alert the pilot to these unintended actions. For instance, if the pilot accidentally engages the autopilot in the wrong mode, the disclosed system may announce "Autopilot engaged in HOLD mode" while the pilot may have intended "Autopilot engaged in NAV mode." This discrepancy may be immediately flagged as an error by the pilot.

As noted above, this disclosure describes techniques that implement feedback mechanisms that may confirm that the aircraft systems are responding to the commands of the pilot as intended. This may be important, especially in complex maneuvers or during critical phases of flight. For example, when the pilot commands a heading change, the disclosed system may confirm the new heading ("Heading select 360 degrees") and may visually display the response of the aircraft on the flight instruments. Advantageously, the feedback and repetition module may provide a constant stream of information about the status of the aircraft and the effects of pilot inputs. This may help the pilot to maintain a strong mental model of the flight situation. By confirming system responses, this module may free up the cognitive resources of the pilot to focus on other critical aspects of flight, such as, but not limited to, traffic awareness, weather monitoring, and overall situational awareness. In single-pilot operations, workload management may be important. The feedback and repetition module may help streamline the pilot-aircraft interface, making it easier to understand and interact with various aircraft systems.

In some examples, a pilot may set a new altitude using the flight management system (FMS). The disclosed automated feedback and repetition module may verbally confirm the input of the pilot: "Altitude set to 10,000 feet." This immediate verbal confirmation may allow the pilot to quickly identify any unintended inputs or incorrect entries. For example, if the feedback and repetition module announces "Altitude set to 11,000 feet" when the pilot intended to set the altitude to 10,000 feet, the pilot may immediately correct the error. The verbal confirmation may provide reassurance to pilots that their input was correctly received and processed by the aircraft systems. Incorrect altitude selections may lead to conflicts with air traffic control instructions or other aircraft. Verbal confirmation may help minimize this risk.

As noted above, this disclosure describes a system configured to provide feedback that may act as an important secondary check, catching potential errors before these errors may impact flight safety. In some examples, a pilot may enter a waypoint incorrectly into the FMS. The system's verbal confirmation ("New waypoint inserted: XYZ") may allow the pilot to quickly verify the accuracy of the entry. If the system announces "New waypoint inserted: ABC" (which was not the intended waypoint), the pilot may immediately correct the error before the error leads to a deviation from the planned route. By confirming each route change or waypoint insertion, the feedback and repetition module may help ensure that the intended flight path is accurately programmed.

Navigation errors may have serious consequences, such as, but not limited to, leading the aircraft off course, into restricted airspace, or into hazardous weather. However, the disclosed route confirmation may help minimize the aforementioned risks.

In some examples, when pilots adjust engine settings (e.g., thrust, fuel flow), configure fuel management systems, or make changes to electrical systems, verbal confirmations may ensure that the aircraft systems are responding to commands of the pilot as intended. For example, the announcement "Fuel transfer initiated from left to right tank" may confirm that the fuel transfer process has begun, allowing the pilot to monitor the progress and ensure the transfer is completed as expected. The aforementioned continuous feedback from engine and systems monitoring may allow pilots to quickly identify any unexpected system behavior or malfunctions. For example, if the feedback and repetition module announces "Fuel transfer initiated from left to right tank. Engine 1 fuel pressure low," the pilot may be immediately alerted to a potential problem and may take appropriate corrective action. Continuous feedback from engine and systems monitoring may provide pilots with a constant stream of information about the systems of the aircraft. This continuous feedback may help pilots maintain a clear understanding of the overall health and performance of the aircraft.

Over time, data entry errors are a common occurrence. Incorrectly entered flight data, fuel calculations, or performance data may have significant implications for flight safety. For example, incorrectly entering the weight of the aircraft may lead to inaccurate takeoff performance calculations, potentially resulting in insufficient takeoff distance or an incorrect climb profile. By confirming each data entry with the pilot, the disclosed system may ensure that the entered data is accurate and reflects the intentions of the pilot. For example, the announcement "Fuel load set to 5,000 pounds" may provide immediate confirmation to the pilot, allowing them to quickly identify and correct any errors before proceeding. The confirmation process may reinforce the understanding of the pilot of the entered data and potential impact of the entered data on the flight.

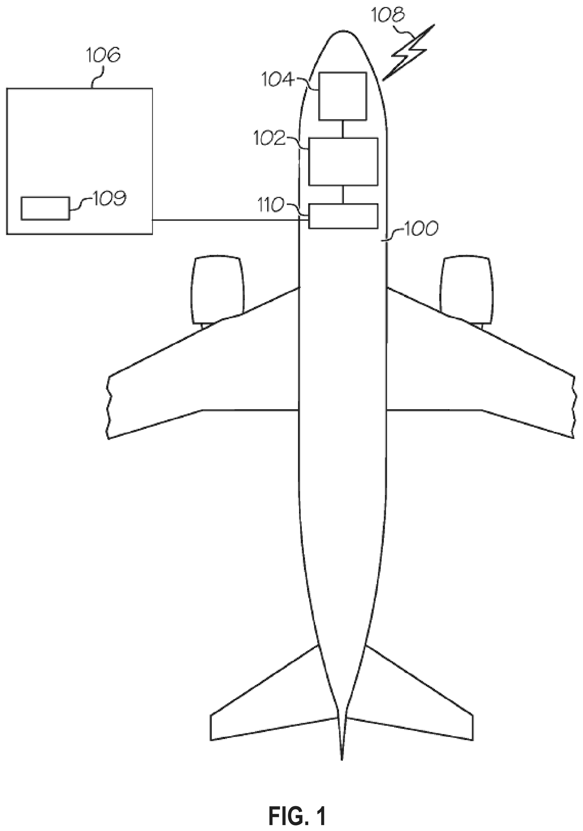

FIG. 1 is a simplified illustration of an aircraft having a feedback and repetition module in accordance with the techniques of this disclosure. The feedback and repetition module 102 may be coupled to one or more audio devices 104. The aircraft 100, and its subsystems and modules may also receive wireless communications 108 from, for example, aircraft communications addressing and reporting system (ACARS), satellite, and similar means of wireless communications. The feedback and repetition module 102 may obtain various aircraft and system data inputs and may generate aural (verbal) announcements and repetitions of entered data and intuitive visualizations that may enhance situational awareness as described in more detail above.

Aircraft 100 may include a user interface 110 coupled to the feedback and repetition module 102. Ground station 106 may also include a user interface 109 coupled to the user interface 110. The user interfaces 109 and 100 may include but are not limited to any combination of one or more of the following: a keypad, touchpad, keyboard, mouse, touchscreen, joystick, knob, microphone, speech or gesture recognition or another suitable device adapted to receive input from a user. Input data, pilot preference parameters, and the like, may be entered via user interface 110 onboard the aircraft 100.

Example audio devices 104 may include, but are not limited to, speakers, radios, intercoms, sirens and horns. In some examples, aural feedback and visualization schemes may be configured for each type of situation in advance, or may be modified while the aircraft 100 is in service to adapt to airlines or pilot preferences. In addition, one or more display modules (not shown in FIG. 1) may be coupled to or integrated into the feedback and repetition module 102. In response to input commands obtained by feedback and repetition module 102, one or more audio devices 104 may render substantially instantaneously, aural feedback notification, as described herein. In addition, the display module may selectively render various intuitive textual, graphic, iconic data, two dimensional or three dimensional, still or moving image data, and thereby may supply additional visual feedback and alerts to the pilot. It will be appreciated that the display module may be implemented using any one of numerous known display devices suitable for rendering textual, graphic, and/or iconic information in a format viewable by the pilot. Non-limiting examples of such display devices may include various multifunction displays (MFD), Near to Eye (NTE), projection displays, cathode ray tube (CRT) displays, and flat screen displays such as LCD (liquid crystal display) and TFT (thin film transistor) displays. The display module may additionally be implemented as a screen mounted display, or any one of numerous known technologies. It is additionally noted that the display module may be configured as any one of numerous types of aircraft flight deck displays. For example, it may be con figured as a multi-function display, a horizontal situation indicator, a vertical situation indicator, or the like. In some examples, however, at least one display module may be configured as PFD.

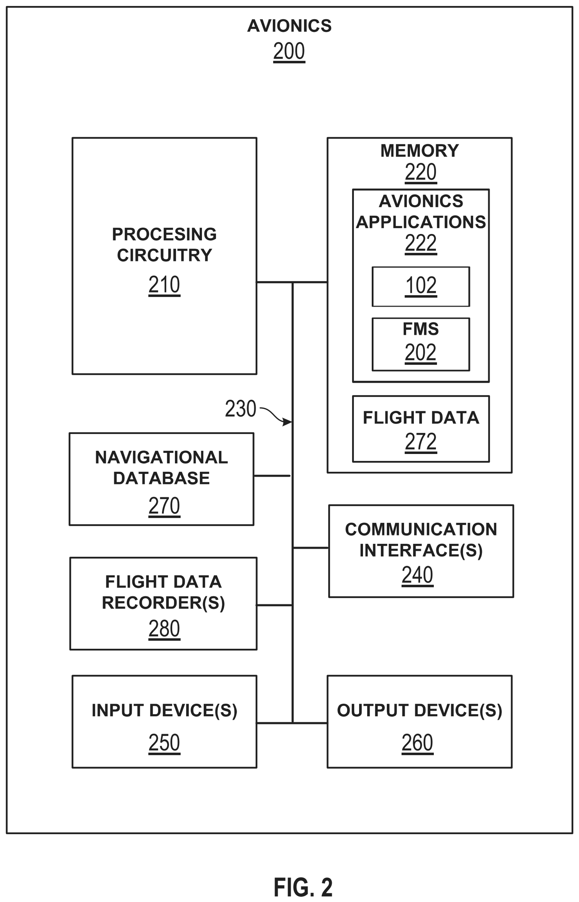

FIG. 2 illustrates an example of an avionics system in accordance with the techniques of this disclosure. Avionics 200 is specialized computing hardware configured to store and execute avionics applications. In the example of FIG. 2, avionics 200 includes processing circuitry 210, memory 220 which stores avionics applications 222, communication interface(s) 240 to communicate with other devices, such as input device(s) 250, output device(s) 260, which may include one or more audio devices 104, navigational database 270, and flight data recorder(s) 280. The aforementioned components of avionics 200 may be connected to one another through a bus 230, which generally represents one or more busses and is intended to generically represent all the electrical and data connectivity of internal components included within avionics 200.

Processing circuitry 210 implements the functionality of and/or executes the instructions associated with avionics applications 222. Processing circuitry 210 may be implemented as any of a variety of suitable circuitry that includes a processing system, such as one or more integrated circuits, microprocessors, digital signal processors (DSPs), application specific integrated circuits (ASICs), field programmable gate arrays (FPGAs), discrete logic, software, hardware, firmware or any combinations thereof. When the techniques are implemented partially in software, avionics 200 may store instructions for the software in a suitable, non-transitory computer-readable medium (e.g., memory 220) and execute the instructions in hardware using processing circuitry 210 to perform the techniques of this disclosure.

Memory 220 is intended to generically represent all memory included within avionics 200. In some implementations, memory 220 may include a plurality of separate devices and memory units. Theses memory devices and memory units may include volatile memory, such as RAM, and/or non-volatile memory, such as ROM and storage media. Example of RAM include DRAM, including SDRAM, MRAM, RRAM. Examples of storage media include solid-state storage media (e.g., solid state drives and/or removable flash memory), optical storage media (e.g., optical discs), and/or magnetic storage media (e.g., hard disk drives). The aforementioned avionics application (shown in FIG. 2 as avionics applications 222) may be stored in any volatile and/or non-volatile memory component of memory 220.

Communication interface(s) 240 generally represents all hardware e.g., transceiver circuitry, within avionics 200 for communicating with external devices either on the ground or while in flight. Communication interface(s) 240 may facilitate communication with external devices via one or more wired and/or wireless network connections by transmitting and/or receiving signals on the one or more networks. Examples of communication interface(s) 240 include a network interface card (e.g. such as an Ethernet card), an optical transceiver, a radio frequency transceiver, a GPS receiver, or any other type of device that can send and/or receive information. Other examples of communication interface(s) 240 may include short wave radios, cellular data radios, wireless network radios, as well as USB controllers. Examples of communication interface(s) 240 for in-flight communication include a very high frequency (VHF) radio, a high frequency (HF) radio, or a satellite communication (SATCOM) radio.

Examples of communication interface(s) 240 used for data links include an aircraft communications addressing and reporting system (ACARS) for providing a digital data link system that allows for the exchange of messages between the aircraft and ground stations for purposes such as flight plan updates, weather information, and maintenance reports. Another examples of communication interface(s) 240 used for data links include controller-pilot data link communications (CPDLC) which allows air traffic control to send instructions and receive acknowledgments from pilots via text messages. Communications interface(s) 240 may also include an automatic dependent surveillance-broadcast transponder. The various examples of communications interfaces listed above represent a non-exhaustive list of the types of the types of communication interfaces that may be included in communication interface(s) 240.

Avionics 200 also includes input device(s) 250 and output device(s) 260. Examples of input device(s) 250 include control display units (CDUs) with alphanumeric keypads or touchscreens to enter flight plans, waypoints, and other necessary data. Input device(s) 250 may also include an FMS control panel for entering information to the FMS 202, such as route, altitude, and speed using dedicated buttons, knobs, and touchscreen interfaces. Input device(s) 250 may also include yoke or sidestick controls as well as touchscreen interfaces. Input device(s) 250 may also include rotary knobs for setting values for altitudes, speeds, and other parameters and toggle switches for selecting modes or turning systems on and off.

Examples of output device(s) 260 may include audio panels to relay input feedback and repetition, communication from radios, and alerts from systems to the cockpit. Output device(s) 260 may also include an electronic flight instrument display to provide visual representations of flight data, including altitude, airspeed, heading, and attitude. Output device(s) 260 may also include a Heads-Up Display (HUD) that projects critical flight information onto a transparent screen in the pilot's line of sight or other cockpit displays to show navigation maps, engine parameters, system statuses, and the like. Output device(s) 260 may also include engine instrumentation displays to display data on engine performance, such as temperature, pressure, and revolutions per minute (RPMs). Output device(s) 260 may also include an FMS display to show flight plan information and performance data, as well as a traffic collision avoidance system (TCAS) display to alert pilots to nearby aircraft and potential collision threats.

The various examples of input and output devices listed above represent a non-exhaustive list of the types of input and output devices that may be included in input device(s) 250 and output device(s) 260. Additionally, input and output functionality of avionics 200 may be facilitated by external devices that are separate from input device(s) 250 and output device(s) 260.

Avionics applications 222 represent a suite of software tools that may be used by a pilot in managing flight operations and managing the aircraft while in flight. Avionics applications 322 includes feedback and repetition module 102 and FMS 202 discussed above as well as other applications for communication, navigation, and monitoring within aircraft 100. Avionics applications 222, for example, may include applications for processing and displaying weather radar data and presenting essential flight information such as altitude, airspeed, attitude, and heading to a pilot. Avionics applications 222 may also include various safety applications related to surveillance systems (e.g., transponders to communicate the aircraft's identity and altitude to air traffic control and other aircraft, such as automatic dependent surveillance-broadcast (ADS-B) systems that provide real-time data to air traffic control and other aircraft). Avionics applications 222 may also include the software to manage various emergency systems (e.g., an emergency locator transmitter, flight data recorder 280, and cockpit voice recorder) and cabin management systems (e.g., passenger infotainment systems and environmental control systems).

Navigational database 270 represents a specialized database that stores information needed by FMS 202 for the navigation and operation of an aircraft for purposes such as flight planning, route management, and ensuring safe navigation throughout a flight. Navigational database 270 may, for example, store waypoints, airways, navigational aids, airport information, standard instrument departures (SIDs) and standard terminal arrival routes (STARs), route data, and flight plans. The waypoints represent information on predefined geographical locations used for navigation, including both en-route waypoints and arrival/departure waypoints. The airways are data defining structured flight paths in the sky, including various air routes and connecting points. The navigational aids may, for example, be information on radio beacons, such as VHF Omnidirectional Range and Instrument Landing Systems that assist pilots in navigation. The airport information may, for example, include details about airports, including runway configurations, elevation, communications frequencies, and available approaches. SIDs and STARs may provide standardized paths for departures and arrivals. The route data may, for example, include information on preferred routes, including distance and estimated times. Flight data 272 may be data regarding planned routes, altitudes, and waypoints for a specific flight. The locations of waypoints, airports, and navigational aids may, for example, be defined by geographical coordinates.

Navigational database 270 may also store information related to restrictions and procedures, performance data, and weather information. The restrictions and procedures may include airspace restrictions, no-fly zones, and specific procedures that need to be followed during flight. The performance data may include information related to aircraft performance, including altitude constraints, and speed limits. The weather information may include relevant meteorological data that might affect flight paths, such as wind patterns or turbulence zones. Navigational database 270 may be regularly updated to reflect changes in air traffic regulations, airport information, and navigational aids to ensure pilots have current information for safe and efficient flight operations.

Although not explicitly shown in FIG. 2, avionics 200 may include or be in communication with numerous other hardware components or hardware systems, such as a global positioning system (GPS) receiver, an inertial navigation system (INS) that includes gyroscopes and accelerometers to calculate position based on movement, weather radar for detecting weather patterns, engine monitoring systems, aircraft data recording systems, flight data recording systems, and other such systems. In some examples, avionics 200 may be configured to utilize inputs from a variety of specialized sensors such as altitude sensors, airspeed sensors, attitude sensors, heading sensors, GPS sensors, temperature sensors, pressure sensors, fuel sensors, weight and balance sensors, navigation sensors, environmental sensors, collision avoidance sensors, and other such sensors.

Flight data recorder(s) 280 may be configured to record, and store in memory 220, flight data 272. In some examples, flight data recorder(s) 280 may have dedicated memory, meaning the memory that stores flight data 272 is separate than, for example, the memory that stores avionics applications 222. Flight data recorder(s) 280 may include any combination of one or more flight data recorders including a quick access recorder, a deployable recorder, or a combined cockpit voice recorder and flight data recorder.

Flight data recorder(s) 280 may be configured to record flight dynamics and motion data. For example, flight data recorder(s) 280 may be configured to record the aircraft's altitude above sea level (i.e., altitude), the aircraft's speed relative to the surrounding air (i.e., airspeed), the aircraft's rate of ascent or descent (i.e., vertical speed), the direction the aircraft is pointed (i.e., heading), the aircraft's nose angle up/down and bank angle left/right (i.e., pitch and roll), the aircraft's deviation from a straight path or wind drift (i.e., yaw), and the aircraft's lateral, vertical, and longitudinal acceleration.

Flight data recorder(s) 280 may also be configured to record control surfaces and positioning data. For example, flight data recorder(s) 280 may be configured to record the aircraft's aileron position for controlling roll, the aircraft's elevator position for controlling pitch, the aircraft's rudder position for controlling yaw, the aircraft's flap positions for controlling changes in lift and drag (e.g., during takeoff, landing, and approach), the aircraft's spoiler positions for reducing lift and slowing the aircraft down, or the aircraft's slat positions for providing added lift during low-speed operations.

Flight data recorder(s) 280 may also be configured to record engine parameters. For example, flight data recorder(s) 280 may be configured to record the aircraft's engine output (e.g., engine thrust or power level), the aircraft engine's core and fan shaft speeds (i.e., N1 and N2 speeds), temperature of gases exiting the engine (e.g., exhaust gas temperature (EGT)), the rate at which fuel is consumed by each engine (i.e., fuel flow rate), oil Pressure, oil temperature, and thrust level set by the pilot (e.g., throttle position).

Flight data recorder(s) 280 may also be configured to record environmental conditions data. For example, flight data recorder(s) 280 may be configured to record outside air temperature, the presence of ice on wings or other critical surfaces, storm and weather information, and wind speed and direction.

Flight data recorder(s) 280 may also be configured to record aircraft systems and equipment data. For example, flight data recorder(s) 280 may be configured to record autopilot status, such as whether autopilot is engaged and what mode (altitude hold, heading mode, etc.) is being implemented. Flight data recorder(s) 280 may also be configured to record the position of the landing gear (e.g., up, down, or transit), brake pressure or braking force applied during landing, hydraulic pressure of braking systems, and cabin altitude and pressurization levels. Flight data recorder(s) 280 may also be configured to record electrical systems status, such as voltage, current, and operational state of systems.

Flight data recorder(s) 280 may also be configured to record flight path and navigation data, such as GPS position (e.g., latitude, longitude, and altitude coordinates), horizontal track and descent/ascent angles (i.e., flight path angle and track), speed relative to the ground (i.e., groundspeed), and navigation waypoints in the flight plan.

Flight data recorder(s) 280 may also be configured to record crew inputs. For example, flight data recorder(s) 280 may be configured to record control inputs, such as a pilot's inputs on yoke/stick, rudder pedals, and throttle. Flight data recorder(s) 280 may also be configured to record status or positions of switches (e.g., fuel pumps, anti-ice). Flight data recorder(s) 280 may also be configured to record communication controls, such as transponder codes, frequency changes, and communications status.

Flight data recorder(s) 280 may also be configured to record the status of warning and alarm systems, such as the status of alarms such as stall warnings, overspeed warnings, or terrain awareness warnings. Flight data recorder(s) 280 may also be configured to record engine and system alerts, such as malfunction notifications related to engine failures, low hydraulic pressures, or other such warnings. Flight data recorder(s) 280 may also be configured to record crew announcements and chimes. Flight data recorder(s) 280 may also be configured to record aural feedback notifications/announcements, in response to crew inputs, as described herein.

In one example, processing circuitry 210 may execute feedback and repetition module 102 and FMS 202. As noted, feedback and repetition module 102, according to the disclosed techniques, may translate the input data into clear, concise audio messages. When the pilot enters data into FMS 202, a verbal/aural and, optionally, visual confirmation from feedback and repetition module 102 may provide immediate feedback.

In some examples FMS 202 may calculate takeoff and landing performance. In some examples, FMS 202 may monitor fuel consumption and may alert pilots to potential fuel shortages. In some examples. FMS 202 may interface with the autopilot to control aircraft flight. In some examples, FMS 202 may automatically adjust flight parameters based on changing conditions.

In a two pilot cockpit, the Pilot Flying (PF) the aircraft may be primarily responsible for flying aircraft 100 manually or monitoring automated systems. As an example, the Pilot Monitoring (PM) aircraft 100 may be responsible for cross-checks of the actions of the PF, and may be responsible for monitoring systems, and assisting with FMS 202 inputs and other tasks. Effective communication and teamwork are important between the pilots. Cross-checking is a safety principle in aviation to minimize errors. Pilots may be distracted by various factors during flight.

Feedback and repetition module 102 may be configured to verbally confirm, in addition to displaying, pilot inputs, which may help prevent errors caused by momentary lapses in attention. Long flights may lead to fatigue, increasing the risk of errors. System confirmation rendered by the feedback and repetition module 102 may act as an extra layer of safety by double-checking the actions of a pilot.

In one example, feedback and repetition module 102 that repeats the input of the pilot may help maintain situational awareness, especially in complex phases of flight. If the avionics system 200 detects an inconsistency or an unlikely input, one of the modules, such as FMS 202 may alert the pilot, prompting the pilots to review and correct the information. In single-pilot operations, the pilot may have a significantly higher workload. In various implementations, aural confirmation of the input may alleviate some of this burden by providing an independent check, especially on critical inputs. In some examples, knowing that feedback and repetition module 102 is double-checking their actions may provide the pilot with greater confidence and may reduce stress. In one example, feedback and repetition module 102 may verbally repeat the input of the pilot (e.g. "Altitude selected: 30,000 feet"). In addition, feedback and repetition module 102 may display the input on a dedicated screen or within the primary flight display. For critical inputs, avionics system 200 could provide an audible alert if the input is deemed unusual or potentially unsafe.

When the pilot enters data into FMS 202, a verbal and visual confirmation from feedback and repetition module 102 may provide immediate feedback. This may confirm that the input was received and processed correctly. Hearing feedback and repetition module 102 acknowledge the input may reinforce the understanding of the pilot of the aircraft's current state and the planned flight path.

In an aspect of the present disclosure, the aforementioned immediate feedback may help prevent errors arising from misinterpretations of the pilot's own inputs or unintended actions. In an example, FMS 202 may perform basic checks on the input data.

In an aspect, for example, if the pilot enters an altitude that is significantly higher or lower than expected, FMS 202 in conjunction with feedback and repetition module 102 may provide an alert or a more cautious confirmation ("Altitude selected: 38,000 feet. Note: This is significantly higher than the planned cruise altitude.") If the disclosed avionics system 200 detects an input that is illogical or potentially unsafe, avionics system 200 may alert the pilot immediately, allowing for prompt correction. In single-pilot operations, the workload may be significantly higher. Aural confirmations may reduce the cognitive burden on the pilot by providing an independent check on their inputs. Hearing feedback and repetition module 102 acknowledge and process their inputs may provide the pilot with greater confidence and may reduce their stress.

The concept of system confirmation for pilot inputs may not be limited to large commercial aircrafts. This concept may have significant potential benefits across a wide range of aircrafts.

In other words, smaller aircrafts, including, but not limited to single-engine planes and light twins, are increasingly equipped with sophisticated avionics systems 200. Aural confirmations disclosed herein may enhance safety for solo pilots by reducing the risk of errors and improving situational awareness. Business jets often operate with reduced crews, sometimes with a single pilot. Aural confirmation in such situations may provide valuable assistance, especially during complex flight phases or in challenging weather conditions. Helicopters may operate in diverse environments and may often perform complex maneuvers. Advantageously, aural confirmation may be particularly beneficial for critical inputs related to flight control systems and navigation of helicopters as well.

The concept of system confirmation may primarily focus on audio feedback. This direct auditory acknowledgment of the pilot's input may provide immediate confirmation and may help maintain situational awareness.

In accordance with the techniques of this disclosure, in some examples, instead of simply repeating the input, feedback and repetition module 102 may employ a machine learning model to analyze the input, detect anomalies and provide context-aware feedback. In an aspect, the machine learning model may compare the input against flight plans, weather conditions, aircraft performance data, and other relevant factors. The machine learning model may flag potentially incorrect or unsafe inputs, such as an altitude that is significantly higher than the planned flight path or a speed that exceeds aircraft limitations.

In an aspect, feedback and repetition module 102 employing a machine learning model may offer more nuanced feedback, such as, but not limited to "Altitude selected: 38,000 feet. Note: This is significantly higher than the planned cruise altitude. Consider reviewing the flight plan." The machine learning model may proactively identify and alert the pilot to potential issues before the issues become critical. By providing context-aware feedback, feedback and repetition module 102 may help pilots make more informed decisions and optimize flight operations. By proactively identifying and mitigating potential risks, the machine learning model may contribute to significantly improved flight safety.

In one example, an audio system comprising one or more audio devices 104 may be capable of delivering clear and concise audio messages to the pilot. The aforementioned feedback and repetition module 102 may be a software module or a dedicated processor that may continuously receive data from critical systems. Feedback and repetition module 102 may identify key inputs, specifically those inputs entered by the pilot (e.g., altitude, speed, heading changes). Feedback and repetition module 102, according to the disclosed techniques, may translate the input data into clear, concise audio messages (aural/verbal announcements).

In some examples, feedback and repetition module 102 may be coupled to an existing audio system that already records audio, possibly for other purposes such as, but not limited to, safety investigations or communication archiving. In some examples, the disclosed features (e.g., repeating pilot inputs) may be an addition to the existing recording system.

As another non-limiting example, the pilot may command aircraft 100 to fly at 200 knots, for example. This input could be given through various means, including but not limited to, direct input, autopilot commands and/or voice commands. Direct input may include adjusting flight controls (like the throttle) to achieve the desired airspeed. Autopilot commands may include entering the target airspeed into the autopilot system. In an aspect, a voice command may include verbally instructing avionics system 200 to "maintain 200 knots."

Avionics system 200 may immediately "capture" this input. If the input is through flight controls, the avionics system 200 may record the precise movements of the control surfaces. If the input is through the autopilot, the avionics system 200 may record the entered data. If the input is a voice command, the avionics system 200 may use speech recognition technology to identify and log the instruction of the pilot. Feedback and repetition module 102 may then "replay" the input of the pilot, either immediately or upon request. This replay may involve verbally repeating the command of the pilot (e.g., "Airspeed set to 200 knots"). The "replay" may also involve displaying the input of the pilot on a screen (e.g., showing the recorded control surface movements or the entered autopilot commands). In some cases, avionics system 200 may re-execute the command of the pilot, as if the command were being given again.

In an aspect, pilots may have immediate confirmation of their inputs, reducing the risk of errors. Trainees could observe and analyze the actions of experienced pilots in real-time. Accident investigators may use recorded verbal confirmations of pilot's input to precisely reconstruct the actions of the pilot during critical events.

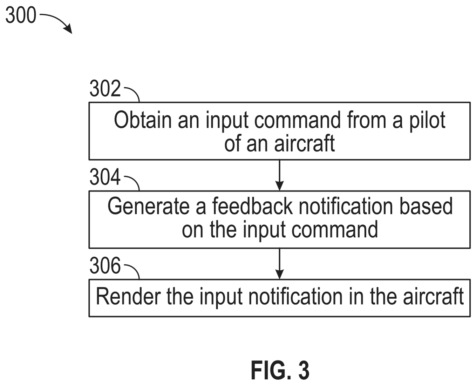

FIG. 3 depicts a flowchart illustrating a method for providing feedback notifications to a pilot in an aircraft in accordance with the techniques of the present disclosure.

Process 300 will be described with respect to system 200, but it should be understood that other computing systems may also be configured to perform process 300. Feedback and repetition module 102 may obtain an input command from a pilot of aircraft 100 (302). The input command may include at least one of: flight control parameters, navigation parameters, and aircraft state parameters. In one example, the input command may include, but is not limited to, altitude, speed, heading changes. Next, feedback and repetition module 102 may generate a feedback notification based on the input command (304). Feedback and repetition module 102, according to the disclosed techniques, may translate the input command into clear, concise audio messages (feedback notification). In accordance with the techniques of this disclosure, when the pilot sets a new altitude, the disclosed system may generate a feedback notification announcing the new target altitude (e.g., "Descending to 10,000 feet").

In accordance with the techniques of the present disclosure, feedback and repetition module 102 may render the input notification in the aircraft 100 (306). In one example, the input notification rendered by the feedback and repetition module 102 may act as an extra layer of safety by double-checking the actions of a pilot.

For critical flight controls like airspeed and altitude settings, pilots may not receive confirmation beeps or announcements from avionics systems 200 themselves. This may be because multiple steps and verifications may be involved in these procedures, and relying solely on an automated confirmation may be risky. While other checks and procedures exist, hearing the repeated input may serve as an additional confirmation for the pilot, reducing the chance of errors or misunderstandings. Especially in high-pressure situations, pilots may become overloaded with tasks. Audio repetition may help pilots focus on other critical aspects of flying while ensuring the control inputs have been registered correctly. In an aspect, in a multi-pilot cockpit, the repeated verbal announcement may clearly communicate the intended airspeed or altitude change to all crew members, promoting better situational awareness and coordination.

In some examples, the audio repetition may be a catch-mechanism for typos rather than adding cumbersome confirmation steps for every input. The pilot may, for example, make an incorrect entry of "altitude 10,000" instead of an intended entry of "1,000." Feedback and repetition module 102 may immediately repeat the input back to the pilot: "Pilot input: altitude 10,000." Upon hearing the repeated altitude of 10,000, the pilot may recognize the error and may take corrective actions. Pilots may double-check the displayed value and may adjust the altitude to the desired 1,000 if necessary. Advantageously, the disclosed techniques may catch typos early on to prevent the typos from turning into critical mistakes. Unlike a multi-step confirmation process, audio repetition may be quick and unobtrusive. Pilots may constantly hear their input back, reinforcing their understanding of the intended action.

The following numbered examples illustrate various aspects of the systems and techniques described above.

Example 1. A computer-implemented method for providing feedback notifications to a pilot in an aircraft includes: receiving an input command from a pilot of an aircraft; generating a feedback notification comprising the input command; and rendering the feedback notification in the aircraft.

Example 2. The method of example 1, wherein the input command includes at least one of: flight control parameters, navigation parameters, and aircraft state parameters.

Example 3. The method of example 1, wherein the feedback notification comprises an aural feedback notification.

Example 4. The method of example 1, wherein the feedback notification comprises a visual feedback notification.

Example 5. The method of example 1, wherein rendering the feedback notification comprises rendering an aural feedback notification using an audio system comprising one or more audio devices.

Example 6. The method of example 1, further comprising: performing a corrective action based on the feedback notification.

Example 7. The method of example 1, further comprising: recording the feedback notification.

Example 8. A system for providing feedback notifications to a pilot in an aircraft, the system comprising: a memory; and processing circuitry coupled to the memory and configured to: receive, by avionics of the aircraft, an input command from a pilot of the aircraft; generate, by the avionics, a feedback notification comprising an indication of the input command; and render, by the avionics, the feedback notification in the aircraft.

Example 9. The system of example 8, wherein the input command includes at least one of: flight control parameters, navigation parameters, and aircraft state parameters.

Example 10. The system of example 8, wherein the feedback notification comprises an aural feedback notification.

Example 11. The system of example 8, wherein the feedback notification comprises a visual feedback notification.

Example 12. The system of example 8, wherein the processing circuitry configured to render the feedback notification is further configured to render an aural feedback notification using an audio system comprising one or more audio devices.

Example 13. The system of example 8, the processing circuitry further configured to: perform a corrective action based on the feedback notification.

Example 14. The system of example 8, the processing circuitry further configured to: record the feedback notification.

Example 15. Non-transitory computer-readable storage media having instructions encoded thereon, the instructions configured to cause processing circuitry to: receive, by avionics of an aircraft, an input command from a pilot of the aircraft; generate, by the avionics, a feedback notification comprising an indication of the input command; and render, by the avionics, the feedback notification in the aircraft.

Example 16. The media of example 15, wherein the input command includes at least one of: flight control parameters, navigation parameters, and aircraft state parameters.

Example 17. The media of example 15, wherein the feedback notification comprises an aural feedback notification.

Example 18. The media of example 15, wherein the feedback notification comprises a visual feedback notification.

Example 19. The media of example 15, wherein the instructions configured to cause processing circuitry to render the feedback notification are further configured to render an aural feedback notification using an audio system comprising one or more audio devices.

Example 20. The media of example 15, the instructions configured to cause processing circuitry to: perform a corrective action based on the feedback notification.

The general discussion of the present disclosure provides a brief, general description of a suitable computing environment in which the present disclosure may be implemented. Any of the disclosed systems, processes, and/or graphical user interfaces may be executed by or implemented by a computing system consistent with or similar to that depicted and/or explained in the present disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure also may be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hardwired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

One or more includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, but these elements should not be limited by these terms. Except where otherwise indicated, these terms are only used to distinguish one element from another. For example, a first contact could be termed a second contact, and, similarly, a second contact could be termed a first contact, without departing from the scope of the various described examples. The first contact and the second contact are both contacts but may not be the same contact.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In the present disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout the present disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

Instructions may be executed by one or more processors, such as one or more DSPs, general purpose microprocessors, ASICs, FPGAs, or other equivalent integrated or discrete logic circuitry. Accordingly, the terms "processor" and "processing circuitry," as used herein may refer to any of the foregoing structures or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

Various examples have been described. These and other examples are within the scope of the following claims.

## Claims

1. A method for providing feedback notifications to a pilot in an aircraft, the method comprising:
receiving, by avionics of the aircraft, an input command from a pilot of the aircraft;
generating, by the avionics, a feedback notification comprising an indication of the input command; and
rendering, by the avionics, the feedback notification in the aircraft.

2. The method of claim 1, wherein the input command includes at least one of: flight control parameters, navigation parameters, and aircraft state parameters.

3. The method of claim 1, wherein the feedback notification comprises an aural feedback notification.

4. The method of claim 1, wherein the feedback notification comprises a visual feedback notification.

5. The method of claim 1, wherein rendering the feedback notification comprises rendering an aural feedback notification using an audio system comprising one or more audio devices.

6. The method of claim 1, further comprising:
performing a corrective action based on the feedback notification.

7. The method of claim 1, further comprising:
recording the feedback notification.

8. A system for providing feedback notifications to a pilot in an aircraft, the system comprising:
a memory; and
processing circuitry coupled to the memory and configured to:
receive, by avionics of the aircraft, an input command from a pilot of the aircraft;
generate, by the avionics, a feedback notification comprising an indication of the input command; and
render, by the avionics, the feedback notification in the aircraft.

9. The system of claim 8, wherein the input command includes at least one of: flight control parameters, navigation parameters, and aircraft state parameters.

10. The system of claim 8, wherein the feedback notification comprises an aural feedback notification.

11. The system of claim 8, wherein the feedback notification comprises a visual feedback notification.

12. The system of claim 8, wherein the processing circuitry configured to render the feedback notification is further configured to render an aural feedback notification using an audio system comprising one or more audio devices.

13. The system of claim 8, the processing circuitry further configured to:
perform a corrective action based on the feedback notification.

14. The system of claim 8, the processing circuitry further configured to:
record the feedback notification.
